# EUROPEAN PATENT APPLICATION

(11) **EP 4 826 612 A1**
(43) Date of publication of application: **21.10.2026**
(21) Application number: 25171033.1
(22) Date of filing: 16.04.2025
(51) Int. Cl.: G06Q 10/06, G06Q 10/08, G06Q 10/30

(54) **AN APPARATUS, A METHOD, AND A DATA STRUCTURE FOR CIRCULAR MATERIAL USE**

(71) Applicant: VCG.AI GmbH, 70197 Stuttgart (DE)
(72) Inventor: WOLF, Beat, 1752 VILLARS-SUR-GLÂNE (CH); FISCHER, Andreas, 1661 LE PÂQUIER (CH); GORIUP DERMASTIA, Jon, 1000 LJUBLJANA (SI); DERMASTIA, Mateja, 1000 LJUBLJANA (SI); KUCULO, Tin, 80799 MUNICH (DE)
(74) Representative: DREISS Patentanwälte PartG mbB

(57) **Abstract**

An apparatus (200) and a method, in particular computer implemented method, for circular material use, wherein the method comprises providing a storage (202), determining a link, and storing the link in the storage (202), wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein determining the link, in particular repeatedly, comprises acquiring a data collection comprising information about the product and the material and the producer, in particular measurements of physical properties of the material and the product, extracting, with a large language model, information linking the product and the material from the data collection, determining, with the large language model or another deep learning model, the part of the link relating the identifier of the material with the identifier of the product depending on the extracted information about the product and the material, extracting, with the large language model or another large language model, information linking the product and the producer from the data collection, determining, with a rule based model, the part of the link relating the identifier of the material with the identifier of the producer of the material depending on the information linking the product and the producer, and wherein storing the link comprises storing the parts in the link in the storage (202).

## Description

The invention relates to an apparatus, a method, and a data structure for circular material use.

Circular material use refers to producing a product from previously used material. The material may be reusable material, renewable material, residual material. The material may be available from output of a process for producing the product, e.g., a residual, a by-product, a co-product or waste of the process. The material may comprise a composition of materials. The aggregate state of the material may be solid, liquid, or gaseous. The material may be provided in form of various aggregate states. The composition may comprise materials of the same or different aggregate states.

The complexity of the product or the complexity of the composition represent a challenge for the circular material use.

A method, in particular computer implemented method, for circular material use, comprises providing a storage, determining a link, and storing the link in the storage, wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein determining the link, in particular repeatedly, comprises acquiring a data collection comprising information about the product and the material and the producer, in particular measurements of physical properties of the material and the product, extracting, with a large language model, information linking the product and the material from the data collection, determining, with the large language model or another deep learning model, the part of the link relating the identifier of the material with the identifier of the product depending on the extracted information about the product and the material, extracting, with the large language model or another large language model, information linking the product and the producer from the data collection, determining, with a rule based model, the part of the link relating the identifier of the material with the identifier of the producer of the material depending on the information linking the product and the producer, and wherein storing the link comprises storing the parts in the link in the storage. Acquiring the data collection and determining the link in particular repeatedly updates the basis for answering a query. This means, the method automatically adapts to changes regarding the producer, the material and the product. Using measurements of physical properties of the material and the product from the data collection, the method predicts the physical or chemical state of the material existing in the real world from which the product is producible in the real world.

For finding a process that allows to produce the product from the material, the link may comprise an additional part that relates an identifier of a process for producing the product using the material with the identifier of the material and with the identifier of the product, wherein determining the link comprises extracting from the data collection additional information that relates the identifier of the process for producing the product using the material with the identifier of the material and with the identifier of the product, and determining the additional part of the link depending on the additional information. The identifier of the process is for example the name of the process.

For finding a process parameter that allows to produce the product from the material the link may comprise an additional part that relates an identifier of a process parameter of a process for producing the product using the material with the identifier of the material and with the identifier of the product, wherein determining the link comprises extracting from the data collection additional information that relates the identifier of the process parameter of the process for producing the product using the material with the identifier of the material and with the identifier of the product, and determining the additional part of the link depending on the additional information.

For finding the producer that provides the material for producing the product for a specific application, the link may comprise an additional part that relates an identifier of an application for that the product is produced with the identifier of the material, wherein determining the link comprises extracting from the data collection additional information that relates the identifier of the application for that the product is produced with the identifier of the material, and determining the additional part of the link depending on the additional information.

For finding the producer that provides the material for producing the product with a physical characteristic, the link may comprise a part that relates an identifier of a physical characteristic of the product with the identifier of the material, wherein determining the link comprises extracting from the data collection additional information that relates the identifier of the physical characteristic of the product with the identifier of the material, and determining the additional part of the link depending on the additional information.

For finding the producer of material that has a specified type required for the application, the link may comprise an additional part that relates an identifier of the type with the identifier of the application, wherein determining (the link comprises extracting from the data collection additional information that relates the identifier of the type with the identifier of the application, and determining the additional part of the link depending on the additional information.

The method may comprise providing or updating instructions for providing the material or producing the product using the material from the producer depending on the result. The instruction may be instructions for operating a device for providing the material or for producing the product

An apparatus for circular material use comprises a storage, wherein the apparatus is configured for determining a link, and storing the link in the storage, wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein apparatus comprises an agent that is configured for in particular repeatedly acquiring a data collection comprising information about the product and the material and the producer, extracting, with a large language model, information linking the product and the material from the data collection, determining, with the large language model or another deep learning model, the part of the link relating the identifier of the material with the identifier of the product depending on the extracted information about the product and the material, and for extracting, with the large language model or another large language model, information linking the product and the producer from the data collection, wherein the apparatus comprises a matcher that is configured for in particular repeatedly determining, with a rule based model, the part of the link relating the identifier of the material with the identifier of the producer of the material depending on the information linking the product and the producer, wherein the apparatus is configured for storing the parts in the link in the storage. This means, the apparatus is configured for in particular repeatedly updating. This means, the apparatus is configured to automatically adapt to changes regarding the producer, the material and the product.

The link may comprise an additional part that relates an identifier of a process for producing the product using the material with the identifier of the material and with the identifier of the product, wherein the apparatus is configured for extracting from the data collection additional information that relates the identifier of the process for producing the product using the material with the identifier of the material and with the identifier of the product, and determining the additional part of the link depending on the additional information.

The link may comprise an additional part that relates an identifier of a process parameter of a process for producing the product using the material with the identifier of the material and with the identifier of the product, wherein the apparatus is configured for extracting from the data collection additional information that relates the identifier of the process parameter of the process for producing the product using the material with the identifier of the material and with the identifier of the product, and determining the additional part of the link depending on the additional information.

The link may comprise an additional part that relates an identifier of an application for that the product is produced with the identifier of the material, wherein the apparatus is configured for extracting from the data collection additional information that relates the identifier of the application for that the product is produced with the identifier of the material, and determining the additional part of the link depending on the additional information.

The link may comprise an additional part that relates an identifier of a physical characteristic of the product with the identifier of the material, wherein the apparatus is configured for extracting from the data collection additional information that relates the identifier of the physical characteristic of the product with the identifier of the material, and determining the additional part of the link depending on the additional information.

The material may be of a type, wherein the link comprises an additional part that relates an identifier of the type with the identifier of the application, wherein the apparatus is configured for extracting from the data collection additional information that relates the identifier of the type with the identifier of the application, and determining the additional part of the link depending on the additional information.

The apparatus may be configured for providing or updating instructions for providing the material or producing the product using the material from the producer depending on the result.

A data structure for circular material use, wherein the data structure comprises a data item for a link, wherein the link relates an identifier of a producer of a material with an identifier of the material, wherein the link relates an identifier of a product that is producible with the material to the identifier of the material, wherein the data structure comprises a data item for an acquired data collection comprising information about the product and the material and the producer, a data item for information linking the product and the material, and a data item for information linking the product and the producer.

The link may comprise an additional part that relates an identifier of a process for producing the product using the material with the identifier of the material and with the product.

The link may comprise an additional part that relates an identifier of a process parameter of a process for producing the product using the material with the identifier of the material and with the identifier of the product.

The link may comprise an additional part that relates an identifier of an application for that the product is produced with the identifier of the material.

The link may comprise an additional part that relates an identifier of a physical characteristic of the product with the identifier of the material.

For the material of the type, the link may comprise an additional part that relates an identifier of the type with the identifier of the application.

The data structure may comprise a data item for instructions for producing the product using the material from the producer depending on the result.

A computer-readable program comprises instructions that, when executed by a computer, cause the computer to execute the method.

Further examples are derivable from the following description and the drawing. In the drawing:
Fig. 1 schematically depicts a circular material use,
Fig. 2 schematically depicts an apparatus for circular material use,
Fig. 3 a flow chart comprising steps of a method.

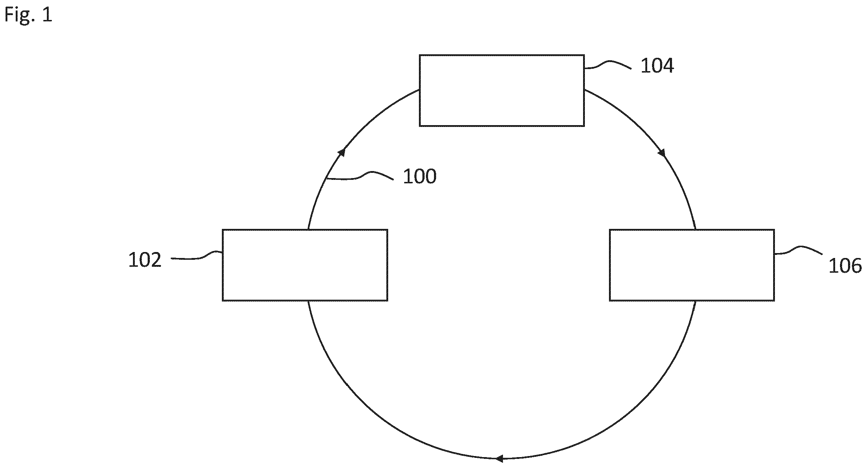

Figure 1 depicts a circular material use 100.

The circular material use 100 comprises a step 102.

The step 102 comprises providing a first material for producing a first product that is producible using the first material.

The circular material use 100 comprises a step 104.

The step 104 comprises producing the first product using the first material.

Producing the first product results in the first product and a second material. The second material may include organic material. The second material may comprise a composition of materials.

The circular material use 100 comprises a step 106.

The step 106 comprises providing the second material as reusable material.

The circular material use 100 continues at step 102 with the reusable material as material for producing the first product or a second product that is producible using the reusable material. The second material may be processed to provide the material for producing the first or the second product. For example, the reusable material is converted into the material in a conversion process for converting the reusable material. For example, the composition comprises the reusable material and other material, and the reusable material is separated in a sorting process from the other material.

A challenge for a producer of a product in the circular material use 100 is finding a reusable material or a composition of materials comprising a reusable material that is usable for producing the first or the second product.

A challenge for a producer of material in the circular material use 100 is finding a producer of a product that is producible with a reusable material that the producer produces, or that a composition of materials that the producer produces comprises.

A challenge for matching the producer of the product with the producer of the material or vice-versa is gathering the links that link the material and the products. The link may be a direct link between the producer and the product. The link between the producer and the product may comprise a process for providing the material for producing the product from material the producer produces. The process may comprise pre-treatment of the material produced by the producer to provide the material for producing the product. The process may comprise processing the material produced by the producer when producing the product.

The following disclosure describes a solution for providing the product that is producible with the reusable material that is usable for producing the product and the producer of the material.

The solution covers the value chain from the producer of the material to the application of the product. The value chain comprises
1) the producer of the material
2) a physical characteristic or type of the product
3) a pre-treatment of the material,
4) a valorization process or technology for the material,
5) a downstream processing of the material when producing the product,
6) the product,
7) the application of the product.

Based on a specified product quality or application of the product, a material having a specific physical characteristic or type is required.

The link comprises at least the product to the producer of the material that is usable for producing the product.

The link may comprise the process that is required for providing the material for producing the product. The link may comprise process parameters that are required for providing the material for producing the product.

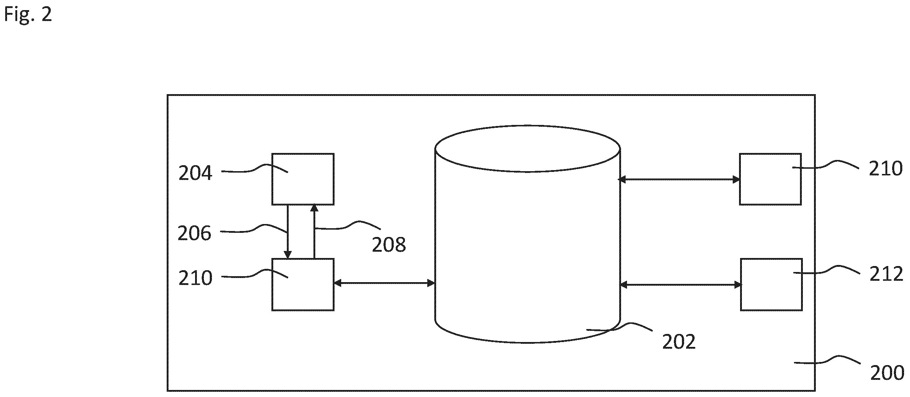

Figure 2 schematically depicts an apparatus 200 for circular material use.

The apparatus 200 comprises a storage 202. The storage 202 is for example a non-transitory storage. The storage 202 is for example a database.

The storage 202 comprises identifiers of producers of material and identifiers of material.

The storage 202 comprises links. Using the identifiers, the links relate producers of material to the material they produce. This is described for an exemplary producer of material.

An exemplary link relates an identifier of the exemplary producer of material with an identifier of the material the exemplary producer produces. The material comprises a reusable material.

The storage 202 comprises identifiers of products that are producible with reusable material. Using the identifiers, the links relate products to the reusable material they are producible with. This is described for an exemplary product. The exemplary product is producible with the reusable material.

The exemplary link for example relates an identifier of the exemplary product to the identifier of the material.

According to some examples, the links relate identifiers of processes for producing the product using the reusable material with identifiers of material and with identifiers of products. This is described for an exemplary process for producing the product using the reusable material.

The exemplary link for example relates an identifier of the exemplary process with the identifier of the material and with the identifier of the product. The process may be a process for pre-treatment of the material, a process for processing the material to produce the product, or a process for post-processing the product.

The apparatus 200 comprises an interface 204.

The interface 204 is configured for providing a query 206 for circular material use comprising the identifier of the material.

The interface 204 is configured for providing a result 208 of the query 206 comprising the identifier of the producer and the identifier of the product for circular material use of the reusable material.

According to some examples, the links relate identifiers of physical characteristics of products with identifiers of the material from that the product with the physical characteristic is producible.

This is described for an exemplary physical characteristic of the exemplary product. The exemplary product is producible for a specific application with the physical characteristic from the material. The exemplary link for example relates an identifier of the exemplary physical characteristic of the exemplary product for the specific application with the identifier of the material. The query 206 may comprise the identifier of the physical characteristic.

According to some examples, for a composition of materials, the links relate identifiers of the compositions with identifiers of the materials in the respective composition.

This is described for an exemplary composition of materials. The exemplary link for example relates an identifier of the exemplary composition with the identifier of the exemplary materials in the composition respectively.

According to some examples, the storage 202 comprises structured and unstructured information about materials and producers for different types of material. According to some examples, the storage 202 comprises structured and unstructured information about materials, processes, and producers for different types of material. The storage 202 for example relates the identifiers by the structured or unstructured information.

The apparatus 200 is configured for executing a method for circular material use.

The apparatus 200 may comprise a processor 210 that is configured for executing the method. The processor 210 is for example configured for receiving the query 206, and to interact with the storage 202 for determining the result 208 depending on the query 206.

The storage 202 may comprise a subcomponent for performing an update of the storage 202. The update may be a regular update. The subcomponent may comprise an interface to at least one external database. The subcomponent may comprise an interface to at least one enterprise resource planning (ERP) system of at least one producer. The subcomponent may comprise a web crawler. The subcomponent may be configured for requesting information for updating the structured or unstructured information in the storage 202 from the at least one external database, the at least one ERP system, or the web crawler. The subcomponent may be configured for updating the structured or unstructured information in the storage 202 depending on received information received from the at least one external database, the at least one ERP system, or the result provided by the web crawler.

The apparatus 200, e.g., the subcomponent, may comprise an agent 210 for determining or updating the links relating the identifier of the material with the identifier of the product in the database 202 depending on the received information.

The agent 210 may comprise at least one deep learning model for automatically determining or updating the links relating the identifier of the material with the identifier of the product.

An example for determining the exemplary link relating the identifier of the material with the identifier of the product is determining the exemplary link and storing the exemplary link linking the identifier of the material with the identifier of the product in the storage 202.

An example for updating the exemplary link relating the identifier of the material with the identifier of the product is determining a new link and storing the new link linking the identifier of the material with the identifier of the product instead of the exemplary link in the storage 202.

The agent 210 may comprise at least one deep learning model for automatically validating a link. An example for validating the link is validating the link with respect to feasibility, economic viability, and environmental impact.

An example for such deep learning model is a first large language model (LLM).

The agent 210 is described by way of example of the first LLM. The agent 210 is not limited to using the first LLM. The agent 210 may be configured for using several LLMs or different deep learning models. Interactions with the deep learning model are described by way of example of interaction with the LLM using prompts. The interactions may include other interactions than prompts.

The agent 210 may be adapted to relating the identifiers by links or validating the links by means of:
- Specifically engineered prompts for the first LLM
- Training the first LLM on the database 202
- Training the first LLM based on human feedback
- Training the first LLM based on information from at least one of the EPR systems.

The storage 202 is not limited to storing the links relating the identifier of the product and the identifier of the material.

The agent 210 is for example configured for automatically generating valid links by identifying the most economically and environmentally circular value chain solutions for various industrial material streams.

The agent 210 is for example configured for automatically linking the solutions to enabling processing technologies, e.g., pre-treatment, valorization processes or downstream processing, needed to establish new value chains.

The storage 202 for example comprises more than 1,000 links each linking one identifier of material with one identifier of a product that is producible depending on a reusable material in the material identified by the identifier of material.

The agent 210 may be configured for discovering previously unexplored links.

The agent 210 may be configured for processing and extracting detailed information about links from a corpus of documents. Exemplary documents in the corpus are documents of the following types:
Research Papers,
Patents,
Project Reports,
Market reports,
Techno economic studies,
Technology process descriptions,
Life Cycle Assessments (LCAs,
Startup and scaleup company profiles,
Regulatory Documents,
Company Data.

An example for a regulatory document is an environmental regulation, a safety standard, or a compliance guideline from a government agency.

An example for a research paper is a Peer-reviewed article providing experimental data, a process innovation, or a theoretical analysis.

A patent is a documents containing for example a detailed description of an invention, a process, or a technology.

An example for a project Report is a technical report from a completed project offering insights into the practical implementation.

An example for company data is proprietary information from a company (used with explicit permissions) detailing an operational process or a financial metric.

The agent 210 may be configured for processing documents of different content formats. Exemplary content formats of the documents are:
Text,
Table,
Graph and Figure,
Image.

The agent 210 may be configured for processing multi-media information, e.g., video or audio.

An example for context of the text is a narrative description, a methodology, or a discussion.

An example for context of the table is structured data presenting numerical values, comparisons, or categorical information.

An example for context of the graph and figure is a visual representation of a data trend, a process flow, or a statistical analysis.

An example for context of the image is a photograph, a schematic, or a diagram, e.g., illustrating equipment, a process, or a material.

The agent 210 may be configured for collecting data. Exemplary for the data collection supported by the agent 210 is:
Automated Scraping,
Manual Acquisition.

Automated scraping may comprise utilizing a web crawler or web crawlers and an application programming interface (API) or APIs to collect documents from approved databases and repositories.

Manual acquisition may comprise manually gathering proprietary data through partnerships and agreements with companies. The agent 210 supports this by an interface for receiving the documents.

The agent 210 may be configured to access documents in accordance with access permissions. The agent 210 is for example configured for ensuring all data collection complies with access rights and licensing agreements.

The agent 210 may be configured for data verification using:
Cross-Referencing,
Expert Review,
Anomaly Detection,
Metadata Tagging,
Entity Recognition,
Semantic Annotation.

Cross-Referencing may comprise comparing data points across multiple sources to validate accuracy.

Expert review may comprise subject matter experts reviewing critical data for correctness.

Anomaly detection may comprise implementing an algorithm or algorithms to identify and flag inconsistencies or outliers in the data.

The agent 210 may be configured for data annotation using:
Metadata Tagging,
Entity Recognition,
Semantic Annotation.

Metadata tagging may comprise assigning metadata to documents and data points for easy retrieval and organization.

Entity recognition may comprise using Named Entity Recognition (NER) to identify and classify key components (e.g., materials, processes, metrics).

Semantic annotation may comprise linking data points to ontologies and taxonomies relevant to bioeconomy and industrial processes.

The agent 210 may be configured for handling figures and tables by:
Optical Character Recognition (OCR),
Table Parsing,
Graph Digitization.

OCR may comprise extracting text from images and scanned documents.

Table parsing may comprise interpreting and converting table data into structured formats using an algorithm or algorithms.

Graph digitization may comprise extracting numerical data from graphs using curve-fitting and data point extraction techniques.

The agent 210 may be configured for formatting standardization by:
Unit Conversion,
Data Normalization,
Template Alignment.

Unit conversion may comprise standardizing units of measurement (e.g., metric vs. imperial) for consistency.

Data normalization may comprise adjusting values measured on different scales to a common scale.

Template alignment refer to mapping diverse document structures to a unified template for processing.

A valid link between the identifier for the product and the identifier of the material is for example determined in case the agent 210 determines for a product and a material that a conversion process from a reusable material in the material to a material that is required to produce the product exists.

The link is for example determined depending on at least one characteristic of the material or the materials. An example for the characteristic is a quantity.

A valid link is for example determined for a product and a material in case the agent 210 determines that the material comprises a quantity of the reusable material that is sufficiently large to produce the product depending on the reusable material.

A valid link is for example determined for a product and a material in case the agent 210 determines that the material comprises a quantity of the reusable material that is sufficiently large to produce sufficient material in the conversion process for producing the product depending on the material produced in the conversion process.

A valid link for a specific application is for example determined for the product and the material in case the agent 210 determines that the material is suitable for producing the product for the specific application.

A valid link is for example determined for a product and a material in case the agent 210 determines that the material comprises a quantity of the reusable material that is sufficiently large to produce sufficient material in the conversion process for producing the product depending on the material produced in the conversion process, and that the conversion process exists.

The agent 210 is not limited to consider the quantities, e.g., amounts of materials, for determining a valid link.

The agent 210 may process details, e.g., information about the conversion process, including chemical plants and chemical processes used, environmental effects, e.g., data on emissions and environmental impact, or economic effects, e.g., financial metrics like Return on Investment (ROI), Net Present Value (NPV), Capital Expenditure (CAPEX), and Operational Expenditure (OPEX) in specific contexts.

This data is applicable for material producers, material processors and buyers of new material.

The agent 210 may be configured for extracting necessary components to construct the links for creating links automatically from available public literature to expand existing links in the database 202 find new links for the database 202.

A link provides the identifiers linked by the link as parameters to algorithmically derive evaluations of the links, provide insights for engineers, economists and researchers to make informed decisions.

The agent 210 may be configured for preprocessing documents in a preprocessing phase.

The documents comprise text. The documents may comprise an image or images.

The preprocessing phase comprises, for example,
Document collection and loading,
Document parsing and processing,
Information extraction,
Semantic index creation,
Reference mapping,
Storing preprocessed data.

Document collection and loading may comprise:
Directory scanning,
Checkpointing.

Directory scanning may comprise scanning a specified data directory for relevant documents. The documents are recognized as relevant for example due to the document format, e.g., PDF format.

Checkpointing may comprise using a file to track processed documents, allowing, e.g., to pause and resume processing without duplication.

Document parsing and processing may comprise:
PDF parsing,
Section extraction,
Table and figure extraction,
Metadata extraction.

PDF parsing may comprise utilizing, e.g., the LayoutPDFReader from the llmsherpa library to accurately parse PDFs, maintaining the document structure.

Section extraction may comprise extracting various sections of the documents, including abstracts, introductions, methods, results, discussions, and conclusions.

Table and figure extraction may comprise capturing data from tables and figures, which often contain crucial quantitative information about links.

Metadata extraction may comprise retrieving document metadata such as titles, authors, publication dates, and affiliations.

Information extraction may comprise:
Link identification,
Quantitative data extraction,
Process details extraction,
Environmental impact data extraction,
Economic data extraction.

Link identification may comprise scanning text to identify mentions materials or characteristics of materials, e.g., quantities, or processes using a material, e.g., a conversion process of Material A to Material B.

Quantitative data extraction may comprise extracting numerical data related to characteristics of material, e.g., quantities, or process parameters, or economic figures.

Process details extraction may comprise gathering information about a process, e.g., the conversion process of Material A to Material B, including technologies used, process conditions, and equipment.

Environmental impact data extraction may comprise extracting data on emissions, material products, and other environmental effects.

Economic data extraction may comprise collecting financial metrics necessary for techno-economic analysis, such as CAPEX, OPEX, ROI, NPV, and breakeven points.

Semantic index creation may comprise:
Node creation,
Embedding generation,
Index building.

Node creation may comprise breaking down documents into nodes (chunks) that represent meaningful sections of text.

Embedding generation may comprise generating embeddings for each node using a suitable language model (e.g., OpenAI's text-embedding-ada-002).

Index building may comprise constructing an index comprising the embeddings, e.g., a vector index, for facilitating efficient semantic search and retrieval.

Reference mapping may comprise:
Citation extraction,
Reference mapping creation,
Document association.

Citation extraction may comprise identifying and extracting references and citations from the documents.

Reference mapping creation may comprise creating mappings between in-text citations and full reference details.

Document association may comprise linking references to their source documents to maintain traceability.

Storing preprocessed data may comprise:
Saving the index,
Saving reference data.

Saving the index may comprise saving the index to storage for quick loading during runtime.

Saving reference data may comprise storing the reference mappings and extracted data in structured formats in storage, e.g., in JSON files.

The database 202 comprising the links reduces the time and effort required to gather and analyze information about the materials and the conversion processes. The database 202 comprising the links comprises information for finding business models, impacts, and regulations.

The apparatus 200, e.g., the subcomponent, may comprise a matcher 212 for relating the identifier of the material with the identifier of the producer of the material comprising the reusable material. Relating the identifier of the material with the identifier of the producer of the material corresponds to matching the producer of the material with the producer of the product. In an exemplary case, wherein the producer of the material and the producer of the product are companies, the matcher 212 is configured for automatically matching the companies according to the link. In an exemplary case, wherein the producer of the material and the producer of the product are at specified locations, the matcher 212 is configured for automatically matching the locations according to the link.

The matcher 212 may comprise at least one rule-based model or at least one deep learning model that is configured for relating the identifier of the material with the identifier of the producer of the material.

An example for a deep learning model for relating the identifier of the material with the identifier of the producer of the material is the first LLM or a second LLM.

The matcher 212 is described by way of example of the first LLM. The matcher 212 is not limited to using the first LLM. The matcher 212 may be configured for using the second LLM or several LLMs or different deep learning models.

The matcher 212 may be configured for relating the identifier of the material with the identifier of the producer of the material by means of:
- Specifically engineered prompts for the first LLM
- Training the first LLM on the database 202
- Training the first LLM based on human feedback
- Training the first LLM based on information from at least one of the EPR systems.

According to some examples, the interface 204 is configured for outputting instructions for providing the material or producing the product using the material from the producer depending on the result.

The interface 204 may comprise a human-machine-interface (HMI). The interface 204 may comprise a machine-machine-interface (M2M).

The apparatus 200 is for example configured for determining the result 208 depending on the query 206 automatically, in particular upon receipt of the query 206.

The links in the database 202 link identifiers. For answering the query 206, the links in the database 202 are represented by nodes. One link is represented as one node. The nodes may be represented by vectors. One node is represented by one vector. The nodes may be represented in an index comprising the vectors.

The query 206 may be represented as a vector.

For answering the query 206, the nodes may be ranked in an index comprising the vectors in an order according to a similarity to the vector representing the query 206. The similarity indicates the relevance for the response 208. The index may be a semantical index. The similarity may be a semantic similarity.

When a user submits the query 206, the apparatus 200 may execute:
Query reception and preprocessing,
Semantic retrieval,
Node reranking,
Context assembly,
Information extraction from nodes,
Answer generation,
Reference Integration,
Response Assembly.

Query reception and preprocessing may comprise:
Input Validation,
Query Normalization,
Query Transformation.

Input validation may comprise ensuring that the received query 206 is valid and not empty.

Query normalization may comprise cleaning and standardizing the query text of the query 206 for processing.

Query transformation may comprise generating alternative formulations of the 206 query to improve retrieval effectiveness.

Semantic retrieval may comprise:
Vector retrieval,
Asynchronous processing.

Vector retrieval may comprise using the index to retrieve nodes that are similar to the query 206.

Asynchronous processing may comprise performing retrieval operations asynchronously for better performance.

Node reranking may be based on:
A custom reranking algorithm,
A scoring configuration.

The custom reranking algorithm may apply a scoring mechanism to rank nodes based on:
Semantic similarity,
Keyword overlap,
Recency and relevance.

The semantic similarity for example is based on how closely the node's content matches the query 206. The similarity for example increases the better a node's content matches the query 206.

The keyword overlap for example is based on the presence of a key term or key terms from the query 206 in the node's content.

The recency and relevance for example gives preference to more recent or contextually relevant information.

The scoring configuration for example uses weights of different scoring factors for determining scores for the nodes, and rank the nodes according to the scores. The weights of different scoring factors may be adjusted in the node reranking.

Context assembly may comprise:
Context selection,
Token management,
Information prioritization.

Context selection may comprise choosing the top-ranked nodes to build a context for the first LLM.

The first LLM may comprise a transformer that uses token. The amount of token may be limited by a maximum token limit.

Token management may comprise ensuring that the combined context does not exceed the first LLM's maximum token limit.

Information prioritization may comprise prioritizing nodes containing critical link information.

Information extraction from nodes may comprise link component extraction.

The link component extraction may comprise extracting from the link that the selected node represents, specific data points related for example to:
A material, e.g., Material A and Material B,
A process detail,
Quantitive data,
Economic data,

The link component extraction may comprise extracting from the selected nodes for a conversion process of Material A to Material B, the substances involved in the conversion.

The process details for example capture technical details of the conversion process.

The quantitative data for example comprises amounts, yields, efficiencies, and other numerical data of the conversion.

The environmental data comprises for example information on emissions, material, and ecological impact of the conversion.

The economic data for example comprises financial metrics required for economic analysis.

Answer generation may comprise:
Prompt construction,
LLM invocation,
Guidelines enforcement,

Prompt construction may comprise using a detailed prompt template to guide the first LLM in generating the answer, ensuring it includes all relevant link components.

LLM Invocation may comprise sending the context and query 206 to the first LLM for generation of an answer of the first LLM.

Guidelines enforcement may comprise instructing the first LLM to adhere to specific guidelines, such as citing sources and avoiding unsupported information in the answer.

Reference integration may comprise:
Citation extraction from the answer,
Reference detail retrieval,
Source attribution.

Citation extraction from response may comprise identifying any references cited in the first LLM's answer.

Reference detail retrieval may comprise matching cited references with full citation details from the reference mappings.

Source attribution may comprise associating information in the answer with its original source documents.

Response assembly may comprise:
Answer formatting,
Inclusion of data tables,
Citation inclusion,
Output formatting.

Answer formatting may comprise organizing the first LLM's answer and the extracted information into a coherent, structured response 208.

Inclusion of data tables may comprise incorporating tables or figures if they enhance understanding of the response 208.

Citation inclusion may comprise adding references and sources in the response 208, e.g., inline or as footnotes.

Output formatting may comprise ensuring that the response 208 is presented in a clear and professional manner, suitable for both web display and API consumption.

The interface 204 is for example configured for response delivery.

The response delivery for example comprises
Web interface rendering,
API response delivery,
Error handling.

Web interface rendering may comprise displaying the response 208, e.g., on a web page. The response 208 may comprise the answer, in particular including any tables or figures.

API response delivery may comprise returning the response 208 for an API consumer. The response 208 for example comprises the answer, in particular including any associated data, in a structured format, e.g., JavaScript Object Notation (JSON) format.

Error handling may comprise providing informative error messages in case of processing failures.

The HMI is for example configured to allow a human user to:
- Access the database 202,
- Provide the query 206,
- Access the result 208,
- Perform quality control of the database 202, including validation, insertion, updating, and removal of data,
- Perform quality control of the generated result 208, including validation, insertion, updating, and removal of the generated result 208,
- Provide feedback for training the agent 210 or the matcher 212,
- Interact with the database 202 and the generated result 206 by means of a conversational agent.

The conversational agent is for example, based on at least one large language model and configured for question answering, manipulation of the database 202, or manipulation of the generated result 208.

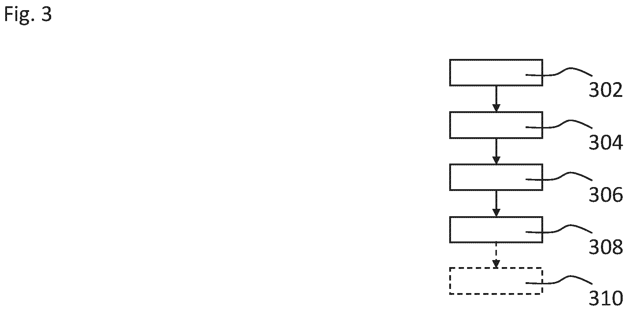

Figure 3 depicts a flow chart comprising steps of the method.

The method comprises a step 302.

The step 302 comprises providing the storage 202.

The method comprises a step 304.

The step 304 comprises determining the link.

The method comprises a step 306.

The step 306 comprises storing the link in the storage 202.

The method may comprise determining and storing the link that comprises the additional part that relates the identifier of the application for that the product is produced with the identifier of the material.

The method may comprise determining and storing the link that comprises the additional part that relates the identifier of the type with the identifier of the application.

The method may comprise determining and storing the link that comprises the additional part that relates the identifier of the physical characteristic of the product with the identifier of the material.

The method may comprise a step 308.

The step 308 comprises providing the result 208 of the database query 206 comprising the identifier of the producer and the identifier of the product related by the link for circular material use of the material.

For the storage 202 that comprises the link that relates the identifier of the process for producing the product using the material with the identifier of the material and with the identifier of the product, the method may provide the process for producing the product using the material according to the link.

For the storage 202 that comprises the link that relates the identifier of the process parameter for producing the product using the material with the identifier of the application, the method may provide the process parameter for producing the product using the material according to the link.

For providing the process, the method may comprise finding the link relating the identifier of the process depending on the identifier of the material and depending on the identifier of the product.

For providing the process, step 308 comprises providing the result 208 comprising the identifier of the process according to the link.

For the database 202 that comprises the link that relates the identifier of the physical characteristic of the product with the identifier of the material, the step 302 may comprise providing the database query 206 comprising the identifier of the characteristic.

For the database query 206 comprising the identifier of the characteristic, the step 306 may comprise finding the link depending on the identifier of the characteristic.

For the database 202 that comprises the link that relates the identifier of the type with the identifier of the application, the step 306 may comprise finding the link comprising the identifier of the type.

Optionally, the method may comprise a step 310.

The step 310 comprises providing or updating instructions for providing the material or the reusable material or producing the product using the reusable material from the producer depending on the result 208.

## Claims

1. A computer implemented method for circular material use, **characterized in that** the method comprises providing (302) a storage (202), determining (304) a link, and storing (306) the link in the storage (202), wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein determining (304) the link, in particular repeatedly, comprises acquiring a data collection comprising information about the product and the material and the producer, in particular measurements of physical properties of the material and the product, extracting, with a large language model, information linking the product and the material from the data collection, determining, with the large language model or another deep learning model, the part of the link relating the identifier of the material with the identifier of the product depending on the extracted information about the product and the material, extracting, with the large language model or another large language model, information linking the product and the producer from the data collection, determining, with a rule based model, the part of the link relating the identifier of the material with the identifier of the producer of the material depending on the information linking the product and the producer, and wherein storing (306) the link comprises storing the parts in the link in the storage (202).

2. The method according to claim 1, **characterized in that** the link comprises an additional part that relates an identifier of a process for producing the product using the material with the identifier of the material and with the identifier of the product, wherein determining the link (304) comprises extracting from the data collection additional information that relates the identifier of the process for producing the product using the material with the identifier of the material and with the identifier of the product, and determining the additional part of the link depending on the additional information, or wherein the link comprises an additional part that relates an identifier of a process parameter of a process for producing the product using the material with the identifier of the material and with the identifier of the product, wherein determining the link (304) comprises extracting from the data collection additional information that relates the identifier of the process parameter of the process for producing the product using the material with the identifier of the material and with the identifier of the product, and determining the additional part of the link depending on the additional information.

3. The method according to one of the preceding claims, **characterized in that** the link comprises an additional part that relates an identifier of an application for that the product is produced with the identifier of the material, wherein determining the link (304) comprises extracting from the data collection additional information that relates the identifier of the application for that the product is produced with the identifier of the material, and determining the additional part of the link depending on the additional information, or **in that** the link comprises a part that relates an identifier of a physical characteristic of the product with the identifier of the material, wherein determining the link (304) comprises extracting from the data collection additional information that relates the identifier of the physical characteristic of the product with the identifier of the material, and determining the additional part of the link depending on the additional information.

4. The method according to claim 3, **characterized in that** the material is of a type, wherein the link comprises an additional part that relates an identifier of the type with the identifier of the application, wherein determining (304) the link comprises extracting from the data collection additional information that relates the identifier of the type with the identifier of the application, and determining the additional part of the link depending on the additional information.

5. An apparatus (200) for circular material use, **characterized in that** the apparatus (200) comprises a storage (202) wherein the apparatus (200) is configured for determining a link, and storing the link in the storage (202), wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein apparatus (200) comprises an agent (210) that is configured for in particular repeatedly acquiring a data collection comprising information about the product and the material and the producer, extracting, with a large language model, information linking the product and the material from the data collection, determining, with the large language model or another deep learning model, the part of the link relating the identifier of the material with the identifier of the product depending on the extracted information about the product and the material, and for extracting, with the large language model or another large language model, information linking the product and the producer from the data collection, wherein the apparatus (200) comprises a matcher (212) that is configured for in particular repeatedly determining, with a rule based model, the part of the link relating the identifier of the material with the identifier of the producer of the material depending on the information linking the product and the producer, wherein the apparatus (200) is configured for storing the parts in the link in the storage (202).

6. The apparatus (200) according to claim 5, **characterized in that** the link comprises an additional part that relates an identifier of a process for producing the product using the material with the identifier of the material and with the identifier of the product, wherein the apparatus (200) is configured for extracting from the data collection additional information that relates the identifier of the process for producing the product using the material with the identifier of the material and with the identifier of the product, and determining the additional part of the link depending on the additional information, or **in that** the link comprises an additional part that relates an identifier of a process parameter of a process for producing the product using the material with the identifier of the material and with the identifier of the product, wherein the apparatus (200) is configured for extracting from the data collection additional information that relates the identifier of the process parameter of the process for producing the product using the material with the identifier of the material and with the identifier of the product, and determining the additional part of the link depending on the additional information.

7. The apparatus (200) according to one of the claims 5 to 6, **characterized in that** the link comprises an additional part that relates an identifier of an application for that the product is produced with the identifier of the material, wherein the apparatus is configured for extracting from the data collection additional information that relates the identifier of the application for that the product is produced with the identifier of the material, and determining the additional part of the link depending on the additional information, or **in that** the link comprises an additional part that relates an identifier of a physical characteristic of the product with the identifier of the material, wherein the apparatus (200) is configured for extracting from the data collection additional information that relates the identifier of the physical characteristic of the product with the identifier of the material, and determining the additional part of the link depending on the additional information.

8. The apparatus (200) according claim 7, **characterized in that** the material is of a type, wherein the link comprises an additional part that relates an identifier of the type with the identifier of the application, wherein the apparatus (200) is configured for extracting from the data collection additional information that relates the identifier of the type with the identifier of the application, and determining the additional part of the link depending on the additional information.

9. The apparatus (200) according to one of the claims 5 to 8, **characterized in that** the apparatus (200) is configured for providing or updating instructions for providing the material or producing the product using the material from the producer depending on the result (208).

10. A data structure for circular material use, **characterized in that** the data structure comprises a data item for a link, wherein the link relates an identifier of a producer of a material with an identifier of the material, wherein the link relates an identifier of a product that is producible with the material to the identifier of the material, wherein the data structure comprises a data item for an acquired data collection comprising information about the product and the material and the producer, a data item for information linking the product and the material, and a data item for information linking the product and the producer.

11. The data structure according to claim 10, **characterized in that** the link comprises an additional part that relates an identifier of a process for producing the product using the material with the identifier of the material and with the product, or **in that** the link comprises an additional part that relates an identifier of a process parameter of a process for producing the product using the material with the identifier of the material and with the identifier of the product.

12. The data structure according to one of the claims 10 to 11, **characterized in that** the link comprises an additional part that relates an identifier of an application for that the product is produced with the identifier of the material, or **in that** the link comprises an additional part that relates an identifier of a physical characteristic of the product with the identifier of the material.

13. The data structure according to claim 12, **characterized in that** the material is of a type, wherein the link comprises an additional part that relates an identifier of the type with the identifier of the application.

14. The data structure according to one of the claims 10 to 13, **characterized in that** the data structure comprises a data item for instructions for producing the product using the material from the producer depending on the result (208).

15. A computer-readable program, **characterized in that** the computer-readable program comprises instructions that, when executed by a computer, cause the computer to execute the method according to one of the claims 1 to 4.

## Amended claims

### Amended claims in accordance with Rule 137(2) EPC.

1. A computer implemented method for circular material use, **characterized in that** the method comprises providing (302) a storage (202), determining (304) a link, and storing (306) the link in the storage (202), wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein determining (304) the link, in particular repeatedly, comprises acquiring a data collection comprising information about the product and the material and the producer, in particular measurements of physical properties of the material and the product, extracting, with a large language model, information linking the product and the material from the data collection, determining, with the large language model or another deep learning model, the part of the link relating the identifier of the material with the identifier of the product depending on the extracted information about the product and the material, extracting, with the large language model or another large language model, information linking the product and the producer from the data collection, automatically generating valid links by identifying the most economically and environmentally circular value chain solutions for various industrial material streams, and automatically linking the solutions to enabling processing technologies, e.g., pre-treatment, valorization processes or downstream processing, needed to establish new value chains, determining, with a rule based model, the part of the link relating the identifier of the material with the identifier of the producer of the material depending on the information linking the product and the producer, and wherein storing (306) the link comprises storing the parts in the link in the storage (202).

2. The method according to claim 1, **characterized in that** the link comprises an additional part that relates an identifier of a process for producing the product using the material with the identifier of the material and with the identifier of the product, wherein determining the link (304) comprises extracting from the data collection additional information that relates the identifier of the process for producing the product using the material with the identifier of the material and with the identifier of the product, and determining the additional part of the link depending on the additional information, or wherein the link comprises an additional part that relates an identifier of a process parameter of a process for producing the product using the material with the identifier of the material and with the identifier of the product, wherein determining the link (304) comprises extracting from the data collection additional information that relates the identifier of the process parameter of the process for producing the product using the material with the identifier of the material and with the identifier of the product, and determining the additional part of the link depending on the additional information.

3. The method according to one of the preceding claims, **characterized in that** the link comprises an additional part that relates an identifier of an application for that the product is produced with the identifier of the material, wherein determining the link (304) comprises extracting from the data collection additional information that relates the identifier of the application for that the product is produced with the identifier of the material, and determining the additional part of the link depending on the additional information, or **in that** the link comprises a part that relates an identifier of a physical characteristic of the product with the identifier of the material, wherein determining the link (304) comprises extracting from the data collection additional information that relates the identifier of the physical characteristic of the product with the identifier of the material, and determining the additional part of the link depending on the additional information.

4. The method according to claim 3, **characterized in that** the material is of a type, wherein the link comprises an additional part that relates an identifier of the type with the identifier of the application, wherein determining (304) the link comprises extracting from the data collection additional information that relates the identifier of the type with the identifier of the application, and determining the additional part of the link depending on the additional information.

5. An apparatus (200) for circular material use, **characterized in that** the apparatus (200) comprises a storage (202) wherein the apparatus (200) is configured for determining a link, and storing the link in the storage (202), wherein the link relates an identifier of a producer of a material with an identifier of the material, wherein the link relates an identifier of a product that is producible with the material to the identifier of the material, wherein the link comprises a part relating the identifier of the material with the identifier of the product of the material and a part relating the identifier of the material with the identifier of the producer of the material, wherein apparatus (200) comprises an agent (210) that is configured for in particular repeatedly acquiring a data collection comprising information about the product and the material and the producer, extracting, with a large language model, information linking the product and the material from the data collection, determining, with the large language model or another deep learning model, the part of the link relating the identifier of the material with the identifier of the product depending on the extracted information about the product and the material, and for extracting, with the large language model or another large language model, information linking the product and the producer from the data collection, wherein the agent (210) is configured for automatically generating valid links by identifying the most economically and environmentally circular value chain solutions for various industrial material streams, and for automatically linking the solutions to enabling processing technologies, e.g., pre-treatment, valorization processes or downstream processing, needed to establish new value chains, wherein the apparatus (200) comprises a matcher (212) that is configured for in particular repeatedly determining, with a rule based model, the part of the link relating the identifier of the material with the identifier of the producer of the material depending on the information linking the product and the producer, wherein the apparatus (200) is configured for storing the parts in the link in the storage (202).

6. The apparatus (200) according to claim 5, **characterized in that** the link comprises an additional part that relates an identifier of a process for producing the product using the material with the identifier of the material and with the identifier of the product, wherein the apparatus (200) is configured for extracting from the data collection additional information that relates the identifier of the process for producing the product using the material with the identifier of the material and with the identifier of the product, and determining the additional part of the link depending on the additional information, or **in that** the link comprises an additional part that relates an identifier of a process parameter of a process for producing the product using the material with the identifier of the material and with the identifier of the product, wherein the apparatus (200) is configured for extracting from the data collection additional information that relates the identifier of the process parameter of the process for producing the product using the material with the identifier of the material and with the identifier of the product, and determining the additional part of the link depending on the additional information.

7. The apparatus (200) according to one of the claims 5 to 6, **characterized in that** the link comprises an additional part that relates an identifier of an application for that the product is produced with the identifier of the material, wherein the apparatus is configured for extracting from the data collection additional information that relates the identifier of the application for that the product is produced with the identifier of the material, and determining the additional part of the link depending on the additional information, or **in that** the link comprises an additional part that relates an identifier of a physical characteristic of the product with the identifier of the material, wherein the apparatus (200) is configured for extracting from the data collection additional information that relates the identifier of the physical characteristic of the product with the identifier of the material, and determining the additional part of the link depending on the additional information.

8. The apparatus (200) according claim 7, **characterized in that** the material is of a type, wherein the link comprises an additional part that relates an identifier of the type with the identifier of the application, wherein the apparatus (200) is configured for extracting from the data collection additional information that relates the identifier of the type with the identifier of the application, and determining the additional part of the link depending on the additional information.

9. The apparatus (200) according to one of the claims 5 to 8, **characterized in that** the apparatus (200) is configured for providing or updating instructions for providing the material or producing the product using the material from the producer depending on the result (208).

10. A data structure for circular material use, **characterized in that** the data structure comprises a data item for a link generated automatically by an agent (210) by identifying the most economically and environmentally circular value chain solutions for various industrial material streams, and automatically linking the solutions to enabling processing technologies, e.g., pre-treatment, valorization processes or downstream processing, needed to establish new value chains, wherein the link relates an identifier of a producer of a material with an identifier of the material, wherein the link relates an identifier of a product that is producible with the material to the identifier of the material, wherein the data structure comprises a data item for an acquired data collection comprising information about the product and the material and the producer, a data item for information linking the product and the material, and a data item for information linking the product and the producer.

11. The data structure according to claim 10, **characterized in that** the link comprises an additional part that relates an identifier of a process for producing the product using the material with the identifier of the material and with the product, or **in that** the link comprises an additional part that relates an identifier of a process parameter of a process for producing the product using the material with the identifier of the material and with the identifier of the product.

12. The data structure according to one of the claims 10 to 11, **characterized in that** the link comprises an additional part that relates an identifier of an application for that the product is produced with the identifier of the material, or **in that** the link comprises an additional part that relates an identifier of a physical characteristic of the product with the identifier of the material.

13. The data structure according to claim 12, **characterized in that** the material is of a type, wherein the link comprises an additional part that relates an identifier of the type with the identifier of the application.

14. The data structure according to one of the claims 10 to 13, **characterized in that** the data structure comprises a data item for instructions for producing the product using the material from the producer depending on the result (208).

15. A computer-readable program, **characterized in that** the computer-readable program comprises instructions that, when executed by a computer, cause the computer to execute the method according to one of the claims 1 to 4.
